(19) Europäisches Patentamt
European Patent Office
Office européen des brevets

(11) **EP 4 474 862 B1**

(12) **EUROPÄISCHE PATENTSCHRIFT**

(45) Veröffentlichungstag und Bekanntmachung des Hinweises auf die Patenterteilung:
**06.08.2025 Patentblatt 2025/32**

(21) Anmeldenummer: **24000064.6**

(22) Anmeldetag: **31.05.2024**

(51) Internationale Patentklassifikation (IPC):
**G01S 7/539** *(2006.01)* **G01S 15/88** *(2006.01)*
**B63G 7/00** *(2006.01)* **B63G 8/00** *(2006.01)*

(52) Gemeinsame Patentklassifikation (CPC):
**G01S 7/539; B63G 7/00; B63G 8/001; G01S 15/88;**
B63G 2007/005; B63G 2008/002

(54) **VERFAHREN ZUR KLASSIFIZIERUNG VON UNTERWASSEROBJEKTEN UND ZUGEHÖRIGES COMPUTERPROGRAMMPRODUKT**

METHOD FOR CLASSIFYING UNDERWATER OBJECTS AND ASSOCIATED COMPUTER PROGRAM PRODUCT

PROCÉDÉ DE CLASSIFICATION D'OBJETS SOUS-MARINS ET PRODUIT PROGRAMME INFORMATIQUE ASSOCIÉ

(84) Benannte Vertragsstaaten:
**AL AT BE BG CH CY CZ DK EE ES FI FR GB GR HR HU IE IS IT LI LT LU LV MC ME MK MT NL NO PL PT RO RS SE SI SK SM TR**

(30) Priorität: **07.06.2023 DE 102023002314**

(43) Veröffentlichungstag der Anmeldung:
**11.12.2024 Patentblatt 2024/50**

(73) Patentinhaber: **Ehlers, Frank**
**24143 Kiel (DE)**

(72) Erfinder: **Ehlers, Frank**
**24143 Kiel (DE)**

(56) Entgegenhaltungen:
DE-A1- 102012 006 566     GB-A- 2 206 209
KR-B1- 102 157 857

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Klassifizierung von Unterwasserobjekten aus Sonarrohdatenabschnitten mit Hilfe eines Minenjagd-Klassifizierungsprogramms. Der Begriff Minenjagd-Klassifizierungsprogramm ist in folgendem Kontext zu sehen:
Fakten ergeben sich durch das Einordnen von Messdaten in Kategorien. Kategorien im Sinne der Detection/Classification/Localisation/Identification (DCLI) für Unterwasserobjekte sind bei der

- Detektion: die Entscheidung, einen Datenabschnitt einer genaueren Analyse zuzuführen, z.B. [Kategorien: A (interessanter Datenabschnitt), B (uninteressanter Datenabschnitt)],
- Klassifikation: die Entscheidung, einen Datenabschnitt als Echo eines bestimmten Objekttyps einzuordnen, z.B. [Kategorien: A (Stein), B (Zylindermine), C (eingesunkene Mine), usw.],
- Lokalisierung: die Entscheidung über die Zuordnung einer dreidimensionalen (bei bewegten Zielen; sechsdimensionalen) Rasterposition zum Datenabschnitt, z.B. [Kategorien: A (Gitterpunkt 1), B (Gitterpunkt 2), usw.]
- Identifikation: die Entscheidung, einem Datenabschnitt das Echo eines bestimmten Objektes, z.B. [Kategorien: A (Zylindermine aus WWII, die schon in der Vergangenheit an derselben Stelle gefunden wurde), B (Zylindermine, die zu Übungszwecken verbracht wurde)] zuzuordnen .

Ein Minenjagd-Klassifizierungsprogramm für Sonarrohdatenabschnitte ist ein Teil der Sonardatenverarbeitungskette. Diese Kette besteht aus einem Analog-DigitalWandler, einem Beamformer-Prozess (für SideScanSonare) oder einer Synthetic Aperture Sonarsignalverarbeitung, wobei dieses zweite Kettenglied eine zwei- oder dreidimensionale Datenstruktur mit den Rückstreuwerten eines vom Sonarsystem ausgesendeten Sendesignals befüllt. Der nächste Schritt der Sonardatenverarbeitungskette ist der Detektionsschritt, der durch Vergleiche zwischen geographisch lokalisierten Ausschnitten der Datenstruktur mit voreingestellten Schwellwerten für z.B. Stärkendifferenz eines reflektierten Signals zu geographisch benachbarten Signalen und Schattenlänge hinter einem dadurch als stark hervorgehobenes Signal bezeichneten Datenpunkt in der Datenstruktur eine Detektion markiert. Dieser Detektionsschritt ist in der Lage, schnell für weitere Untersuchungen interessante Datenabschnitte zu detektieren, während uninteressante Datenabschnitte nicht weiter untersucht werden. Die Hauptaufgabe der Detektion ist es, eine schnelle Verarbeitung zu ermöglichen, bei der möglichst wenige Datenabschnitte mit Echostrukturen von echten Minen nicht berücksichtigt werden. Dabei werden in realen Anwendungen immer noch sehr viele Sonarrohdatenabschnitte durchgelassen, die sogenannte Falschalarme enthalten, also Echostrukturen, die im Sinne der Detektionsschwellen Ziele sein könnten, aber in einer genaueren Klassifizierung noch als z.B. Strukturen natürlichen Ursprungs herausgefiltert werden. Für das in der Beschreibung ausgeführte Minimalbeispiel einer Implementierung ist der Fall wichtig, in dem das rückgestreute Signal des Sendesignals im Hintergrundgeräusch entdeckt werden muss. Dafür wird das sogenannte Matched Filter verwendet, das eine Korrelation mit dem bekannten Sendesignal darstellt und für Gauß'sche Hintergrundgeräusche optimal ist. Das Klassifizierungsprogramm hat also die Aufgabe, jedem Sonarrohdatenabschnitt mindestens einen Ähnlichkeitswert zuzuordnen. Mit diesem Ähnlichkeitswert (bei einer Zuordnung zu mehreren Ähnlichkeitswerten: mit diesen Ähnlichkeitswerten) kann einer nachfolgenden automatischen Verarbeitung oder einem Sonaroperator quantitativ ein möglicher Zusammenhang zwischen den in den Sonarrohdaten abgespeicherten Werten und dem Vorhandensein einer Seemine in dem zum Sonarrohdatenabschnitt zugehörigen geographischen Messabschnitt angezeigt werden, z.B. könnte dieser mögliche Zusammenhang als aus den Werten des Sonarrohdatenabschnitts geschätzte Vorab-Information (in der Bayes'schen Behandlung von Schätzverfahren) für das Vorhandensein von 0 kg bis 1000kg TNT von dem Klassifizierungsprogramm an die nachfolgenden Sonardatenverarbeitungsschritte oder einem Sonaroperator angezeigt werden. Um diese Schätzung einer Vorab-Information durchführen zu können, benötigt das Klassifizierungsprogramm entweder ausreichend große Datenmengen, mit denen es trainiert wird (dann handelt es sich bei dem Klassifizierungsprogramm um einen vorher trainierten lernfähigen/trainierbaren Algorithmus im Sinne eines künstlichen Neuronalen Netzes, oder das Klassifizierungsprogramm verwendet die Formulierung funktionaler Zusammenhänge (das sind Modelle), um von den gemessenen Daten auf die Statuswerte der zu den Messdaten gehörigen Objekte zu schließen. Natürlich kann man sich auch eine modulweise Vermischung der beiden Techniken vorstellen: trainierbare Parameter für die funktionalen Zusammenhänge. Letztendlich ist ein implementiertes Klassifizierungsprogramm immer als Rechenvorschrift zu verstehen, die die Werte der Sonarrohdatenabschnitte in die operationell benötigten Schätzwerte umwandelt, also insgesamt als eine mathematische Funktion.

Egal ob funktionale Abhängigkeiten zwischen Modellinformation nun explizit angegeben sind oder implizit durch das Trainieren mit Testdaten im Algorithmus gespeichert sind, das Vorhandensein und die zutreffende Parametrisierung entscheiden über den Erfolg bei der Anwendung eines Klassifizierungsprogramms. Wenn z.B. ein Klassifizierungsprogramm vorgegebene Information über die Lage und Ausrichtung von Sandrippelfeldern auf dem Meeresboden ausnutzt, wird es in der Lage sein, Echos, die an diesen Sandrippelfeldern entstanden sind, diesen Sandrippeln zuzuordnen, also die entsprechenden Sonarrohdatenabschnitte als Sonarechos natürlichen Ursprungs zu klassifizieren, wohingegen ein Klassifizierungsprogramm, das diese Information weder implizit noch explizit enthält, diese Klassifizierung nicht vornehmen kann. Neben Lage und Ausrichtung von Sandrippelfeldern gibt es in der maritimen Umgebung eine Vielzahl von beschreibenden Parametern: den Meeresboden betreffend (Schichtung zwischen unterschiedlichen Bodentypen, Beschreibung der Bodentypen (Körnungsgrößen von Sand, Einlagerung von Gasen in Schlick, etc.), die Wassersäule betreffend (Schichtung nach Temperatur und Salzgehalt, Strömungen, Turbulenzen, etc.) und die Wasseroberfläche betreffend (Wind, Wellenhöhe, Wellenrichtung, etc.). Diese Parameter sind durch physikalische, chemische und biologische Prozesse miteinander verbunden, so verändert z.B. starker Wind an der Wasseroberfläche über den Welleneintrag die Gestalt des Meeresbodens in flacheren Gewässern. Die maritime Umgebung steht auch in Verbindung zum eigentlichen Zielobjekt der Minensuche, nämlich der Mine selbst: Strömung um die Mine sorgt bei sandigem Boden für Auskolkung, Schlickboden lässt Minen einsinken. Insbesondere die Schallausbreitung in der Wassersäule beeinflusst die Güte des Sonarsystems, bei der Kohärenzverluste und Ausbreitungsverluste die Detektionsfähigkeit des Sonarsystems beeinflussen. In der Sonarsignalverarbeitungskette, also auch im Klassifizierungsprogramm, wird auf die speziellen Systemeigenschaften des Sonarsystems und seiner Trägerplattform eingegangen. Weitere Abhängigkeiten ergeben sich zwischen der operationellen Lage (also etwa der Aufgabenstellung, wieviel Seegebiet in welcher Zeit mit einer geforderten Qualität zu untersuchen ist) und dem Klassifizierungsprogramm z.B. dadurch, dass schnellere Trägerplattformen weniger Sonarsendesignale auf vorgegebene geographische Gebiete senden können als langsamere. Ein Klassifizierungsprogramm gilt als geeignet, wenn mit seiner Anwendung innerhalb der Sonarsignalverarbeitungskette die operationelle Aufgabenstellung in einem bestimmten Seegebiet mit einem bestimmten Sonarsystem auf einer bestimmten Trägerplattform erreicht wird. Natürlich wird in einer derart sicherheitsrelevanten Anwendung wie der Minenjagd nicht nur ein auskömmlich geeignetes Klassifizierungsprogramm angewendet werden sollen, sondern immer das am besten geeignete Klassifizierungsprogramm.

In evolutionären Systemen versuchen Individuen unterschiedlicher Spezies, durch das Einfügen neuer Kategorien Vorteile im Zugriff auf knappe Ressourcen zu erlangen, denn einerseits erlaubt das Zufügen einer weiteren Kategorie die Zuordnung (und das Erlernen der Zuordnung) von Messdaten zu ressourcentragenden Objekten (z.B. einem gewachsenen Blatt eine Wasser enthaltende Wurzel zuzuordnen), andererseits gelingt diese Zuordnung nur dann effektiv, robust und effizient, wenn entsprechende Sensorik und zeitgerechte Sensorsignalverarbeitung vorhanden sind, was aber selbst auch eine ressourcenkostende Voraussetzung darstellt. In dieser spieltheoretischen Betrachtungsweise lassen sich auch die Entwicklungsschritte neuer Waffensysteme und dazu geeigneter Gegenmaßnahmen modellieren.

Im Sinne einer Immunisierung gegen neue Waffensysteme hat die Zeitdauer der Ausbreitung geeigneter Gegenmaßnahmen eine entscheidende Rolle: Je schneller eine geeignete Gegenmaßnahme kommuniziert und angewendet werden kann, desto geringer ist der Schaden, den ein neues Waffensystem anrichten kann.

Die Schnelligkeit der Ausbreitung geeigneter Gegenmaßnahmen erfordert eine infrastrukturelle Organisation, an deren entscheidender Stelle eine Entscheidung getroffen werden muss, ob eine Gegenmaßnahme andere Kategorien überdeckt als bisher bestehende/verfügbare Gegenmaßnahmen.

Für die Evolution von Minen und Minenjagdsystemen wird dementsprechend betrachtet: Je besser die Zielerkennungsraten (bei operationell machbaren Falschalarmraten) sind, desto weniger verfügungsraumbegrenzend sind Minen einsetzbar. Daher werden Minenhersteller/Minenanwender versuchen, die Liste bestehender Kategorien, die bisher zur Minenerkennung verwendet werden, durch neue Kategorien zu erweitern. Das kann Formveränderungen betreffen oder das Auslegen von Minen in immer komplexeren Umgebungsbedingungen. In Anbetracht der Komplexität der Minen/Minenjagd/Umwelt-Systeme ist eine große Anzahl von Kategorien zu erwarten, die es auf der einen Seite als operationell relevant zu generieren und auf der anderen Seite operationell in ihrer Wirkung zu neutralisieren gilt.

Eine Internetseite ("GitHub - roboflow-ai/dji-aerial-georeferencing: Detect objects in drone videos and plot them on a map" (zuletzt geladen am 03.03.2023)) zeigt ein Verfahren, um einer Drohne ein Objekt-Erkennungs-Programm zur Erkennung eines Objektes bereitzustellen, mit folgenden Merkmalen:

a) die Drohne weist einen Sensor zur Erzeugung von Sensordatenabschnitten zur Erkennung eines Objektes auf,
b) der Sensor ist ein optischer Sensor,
c) die Drohne wird mit einem Einsatztransporter in ein Missionsgebiet verbracht,
d) der menschliche Bediener wählt ein Objekt-Erkennungs-Programm nach subjektiven Entscheidungsgrundlagen aus und überträgt dieses Programm auf die Drohne. Für eine praktische Umsetzung der Erfindung ist dieses Beispiel wichtig, denn es erklärt, wie die Rechenvorschriften der Klassifizierungsprogramme technisch organisiert abgelegt und aufgerufen werden können. Um den Auswahlprozess zu automatisieren, werden in dieser Erfindung die Zusammenhänge zwischen DrohnenEinsatzziel (incl. zu suchende Objektspezifikationen), Drohnen-Einsatzgebiet und Drohnen-Systemdetails (incl. Sensor) algorithmisch verfügbar gemacht. Insbesondere ist dabei wichtig zu bemerken, dass die Drohnen-Systemdetails auch Programme enthalten, die selbstständig anhand der aktuell durch die Sensorik vorliegenden Werte und anhand von Vergleichen mit historischen Daten Entscheidungen über den weiteren Verlauf der Mission treffen. Die Entscheidung, welches Objekt-Erkennungs-Programm das Beste ist, muss diese Zusammenhänge gänzlich und in Bezug auf das Drohneneinsatzziel berücksichtigen. Des Weiteren ist in den Ansprüchen 4 und 5 dargelegt, dass eine verbesserte Organisation des Ablagemechanismus für die Klassifizierungsprogramme zu einer erhöhten Wiederverwendbarkeit des Vorgehens nach Anspruch 1 e) führt.

Die Internetseite (https://www.ansys.com/products/digital-twin/ansys-twin-builder (zuletzt geladen am 03.03.2023)) zeigt, dass mit Hilfe von Parameterwerten Simulationen berechnet werden. Die algorithmische Verfügbarkeit der eine Entscheidung zum Einsatz eines bestimmten Objekt-Erkennungs-Programms begründenden Details wird in dieser Internetseite aufgezeigt. Des Weiteren wird hier aufgezeigt, wie die (z.B. in roboflow-ai) abgelegten Rechenvorschriften (ComputerProgramm-Quellcodes z.B. der Objekt-Erkennungs-Programme) in eine mathematische Formel umgewandelt werden, d.h. wie sie in eine physikalische Modellbeschreibung eingebettet werden. Es stellt sich heraus, dass der Start der tatsächlichen Simulationen für Simulationsbereiche und -genauigkeiten technisch komplexer Anwendungen wie der Minenjagd zu praktisch nicht durchführbaren Simulationszeiten führt.

Eine Internetseite (https://juliahub.com/products/juliasim/, (zuletzt geladen am 03.03.2023)) zeigt eine Ermittlung von Eignungswerten. Darin geht es um Surrogate für numerische Simulationen. Die Surrogate sorgen dafür, dass sich die Simulationszeiten verkürzen. Die verwendeten Surrogate basieren auf gelernten Vereinfachungen von hochpräzise simulierten oder realen Anwendungen. Für die Minenjagd sind (wie bereits oben erwähnt) die hochpräzisen Simulationen nicht durchführbar. Des Weiteren gilt es, die negativen Auswirkungen, die sich durch das Einbringen neuartiger Minentypen ergeben könnten, möglichst schnell zu unterbinden, sodass reale Anwendungen ausgeschlossen werden müssen.

Eine Internetadresse (https://en.wikipedia.org/wiki/Acoustic_wave_equation, (zuletzt geladen am 03.03.2023)) erklärt, wie die Wellengleichung für die Ausbreitung von Schallwellen hergeleitet wird. Ein Artikel (Modelling Underwater Acoustic Propagation using One-way Wave Equations, https:/larxiv.org/abs/2202.06559v1, (zuletzt geladen am 03.03.2023)) beschreibt die Schwierigkeiten, die existieren, wenn man die Wechselwirkungen zwischen Medium und sich ausbreitender Welle beschreiben muss. Ein Artikel (Incorporation of Spatial Stochastic Variability into Paracousti-UQ, https://www.osti.gov/biblio/1468714/, (zuletzt geladen am 03.03.2023)) beschreibt, wie die Medieninteraktion mittels der Anwendung von Polynomial Chaos Polynomen numerisch realisiert werden können.

Die nächsten drei Fundstellen bestätigen, dass PCE und Wellengleichung anwendbar sind, sie setzen aber an der linearisierten Gleichung an, die es nicht erlaubt, den gesamten Sonareinsatz zu beschreiben:

- Ein Aufsatz (Estimation of Acoustic Propagation Uncertainty Through.. Polynomial Chaos Expansions, Kevin D. LePage, Analytic Acoustics Section, Code 7144 Naval Research Laboratory Washington, DC, 20375, 9th International Conference on Information Fusion, 10-13 July 2006, Florence, Italy.) zeigt ein Verfahren zur Schätzung der Unsicherheiten einer Schallausbreitung. Hierzu wird ein Verfahren der Polynomial Chaos Expansion, angewandt.

- Die JP2017227452A zeigt ein Verfahren zur Berechnung von Schallausbreitungsunsicherheiten. Berechnet wird, in welchem Maße ausgesandter Schall eines Sonars gedämpft wird. Das Berechnungsverfahren nutzt Polynomial Chaos Expansion Gleichungen.

- Die CN101604019B vom 2012-07-04 mit der Bezeichnung "Method for quickly calculating characterisation and transfer of uncertainties of marine environment and sound fields" zeigt ein Verfahren zur Berechnung von Umwelteinflüssen auf Unterwasserschall mit Hilfe von Polynomial Chaos Expansion Gleichungen.

Eine Internetadresse (https://en.wikipedia.org/wiki/Item_response_theory_(zuletzt geladen am 03.03.2023)) verweist auf ein Dokument, das sich mit der Item Response Theory beschäftigt.

Ein Fachbuch (Hanns Ludwig Harney, Bayesian Inference, Data Evaluation and Decisions, Springer, 2nd Edition, 2016. Seiten 138-149) zeigt mathematische Grundlagen. Das "Trigonometric Model" als "item response function (IRF)" wird explizit angewendet, um auf eine objektive Vergleichbarkeit zu erzielen.

In einem Artikel (T. Lefebvre, "On Moment Estimation From Polynomial Chaos Expansion Models," in IEEE Control Systems Letters, vol. 5, no. 5, pp. 1519-1524, Nov. 2021, doi: 10.1109/LCSYS.2020.3040851.) wird gezeigt, wie aus der Beschreibung eines Polynomial Chaos Expansion Modells die Formeln für die Kumulanten der Verteilung errechnet werden können.

Eine Internetseite (Edgeworth series - Wikipedia, https://en.wikipedia.org/wiki/Edgeworth_series, (zuletzt geladen am 03.03.2023)) zeigt, wie die Edgeworth Reihe aus den Kumulanten einer Verteilung gebildet wird, um diese Verteilung dann mithilfe der Normalverteilung beschreiben zu können.

Eine Internetseite (Fehlerfortpflanzung - Wikipedia, https://lde.wikipedia.org/wiki/Fehlerfortpflanzung, (zuletzt geladen am 03.03.2023)) beschreibt das Generalisierte Fehlerfortpflanzungsgesetz, mit dem Unsicherheiten für Eingangsparameter in Unsicherheiten für Ausgangswerte umgerechnet werden.

Eine Internetseite (https://en.wikipedia.org/wiki/Matched_filter, (zuletzt geladen am 03.03.2023)) beschreibt den Aufbau eines Matched Filters, bei dem Echos ausgesendeter Schallsignale dadurch detektiert werden, dass nach dem Aussenden empfangene Schallsignale mit dem bekannten ausgesendeten Schallsignal korreliert werden.

Eine Internetseite (https://istio.io/, (zuletzt geladen am 03.03.2023)) beschreibt das "Istio service mesh", das aus einem Computerprogrammprodukt heraus ein programmierbares, sich an die jeweilige Anwendung anpassendes Netzwerk von Micro-Services erstellt.

Eine Internetseite (https://en.cppreference.com/w/cpp/language/constraints, (zuletzt geladen am 03.03.2023)) beschreibt ein Konzept als eine Modellierung semantischer Kategorien. Ein Konzept hat die Fähigkeit, bedeutungstragende Semantik zu spezifizieren.

Eine Internetseite (https://www.iiconsortium.org/wp-content/uploads/sites/2/2023/04/JOI-20230426-Prediction-and-Prevention-of-Wildfires.pdf, (zuletzt geladen am 03.05.2023)) beschreibt den Aufbau einer Cloudbasierten Sensor-Signalverarbeitung, in dem Micro-Services die Verarbeitung der Sensordaten übernehmen.

Die Offenlegungsschrift DE 10 2012 006566 A1 offenbart ein Verfahren zur Detektion von Seeminen.

Die Offenlegungsschrift GB2206209A offenbart ein System zum Überwachen der Performance einer Minenjagd-Vorrichtung.

Die Offenlegungsschrift KR102157857B1 offenbart ein Minenjagd- und Identifizierungsverfahren, bei dem ein AUV eingesetzt wird.

Der Erfindung liegt die Aufgabe zu Grunde, ein Verfahren zur Klassifizierung von Unterwasserobjekten aus Sonarrohdatenabschnitten mit Hilfe eines Minenjagd-Klassifizierungsprogramms vorteilhaft ausbilden.

Diese Aufgabe wird erfindungsgemäß gelöst durch die auf ein Verfahren gerichteten Merkmale des Anspruches 1. Ferner wird diese Aufgabe erfindungsgemäß gelöst durch die auf ein Computerprogrammprodukt gerichteten Merkmale des Anspruches 6 gelöst.

Die mit der Erfindung erzielten Vorteile bestehen darin, dass aus bekannten Minenjagd-Klassifizierungsprogrammen das am besten für die operationelle Aufgabenstellung und für die gerade vorliegenden Umweltbedingungen geeignete Programm ausgewählt und eingesetzt wird. Die zu Grunde liegende Idee ist, ein AUV vor einer Mission mit einem Minenjagd-Klassifizierungsprogramm mit einem hohen Verwendungswert zu versehen. Weitere Vorteile und Effekte werden im Sachzusammenhang der Ausführungsbeispiele genannt.

Überraschend sorgt das Merkmal 1e) bei Einsatz des Trigonometrischen Modells innerhalb der Item Response Theory für eine objektive Auswahl, denn so ist ein einheitliches Maß implementiert, das numerisch ermittelte Abstände von Verwendungdwerten vergleichbar macht.

Der Vorteil, nur das für eine spezifische Mission am besten geeignete Klassifizierungsprogramm auf dem AUV zu installieren, besteht darin, dass so nur eine minimale Wissensweitergabe bei Verlust des AUVs riskiert wird. Würde die Speicherung sämtlicher verfügbarer Klassifizierungsprogramme und die Auswahl an Bord des AUVs stattfinden, wäre bei Verlust des AUVs das gesamte Wissen um eine Minenklassifizierung preisgegeben.

Vorteilhafte Ausgestaltungen der Erfindung geben die Unteransprüche 2 bis 5 an. Die zugehörigen Vorteile und Effekte werden im Sachzusammenhang der Ausführungsbeispiele genannt.

Ausführungsbeispiele der Erfindung werden nachfolgend an Hand der Zeichnungen erläutert. Hierbei zeigen:

Fig. 1 ein System zur Durchführung eines Verfahrens zur Klassifizierung von Unterwasserobjekten, als Prinzipskizze;
Fig. 2 Ein- und Ausgänge eines im Verfahren eingesetzten Berechnungsprogramms, um von mehreren Minenjagd-Klassifizierungsprogrammen dasjenige auszuwählen, das am besten geeignet ist.

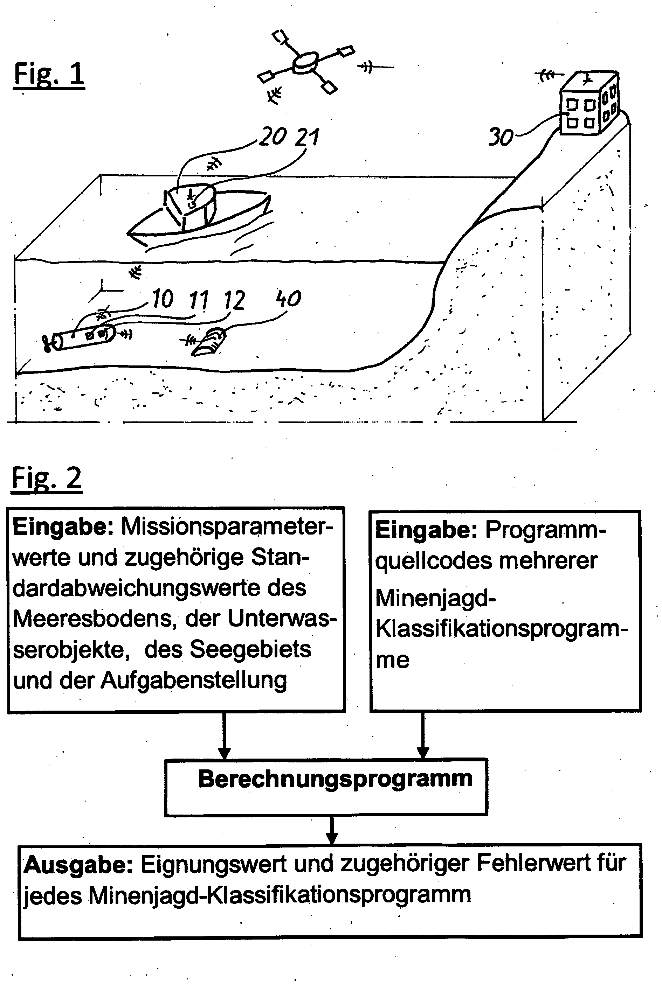

An Hand der Fig. 1 und 2 wird nachfolgend eine **erste Ausbildung** eines Verfahrens zur Klassifizierung von Unterwasserobjekten 40 beschrieben, das folgende Merkmale aufweist:

a) das Verfahren verwendet ein unbemanntes Unterwasserfahrzeug; welches nachfolgend AUV 10 genannt wird und eine an einen AUV-Rechner 11 angeschlossene Sonareinrichtung 12 aufweist, und einen Mutterschiffsrechner 21 eines Mutterschiffs 20, der einerseits mit dem AUV-Rechner 11 und andererseits mit einem Rechenzentrum 30 kommuniziert,

b) während einer Klassifizierungsmission klassifiziert der AUV-Rechner 11 mit einem Minenjagd-Klassifizierungsprogramm aus Sonarrohdatenabschnitten der Sonareinrichtung 12 Unterwasserobjekte 40,

c) das Mutterschiff 20 übermittelt vor einer Klassifizierungsmission mindestens einen Missionsparameterwert und einen zugehörigen Standardabweichungswert mindestens eines Missionsparameters aus jeder der folgenden Gruppen an das Rechenzentrum 30:

- Gruppe mit Missionsparametern des Meeresbodens,
- Gruppe mit Missionsparametern der zu detektierender Unterwasserobjekte,
- Gruppe mit Missionsparametern des Seegebietes,
- Gruppe mit Missionsparametern der operationellen Aufgabenstellung,

d) das Rechenzentrum hat Zugriff auf einen jeweiligen Programmquellcode mehrerer Minenjagd-Klassifizierungsprogramme,

e) das Rechenzentrum berechnet für jedes der mehreren Minenjagd-Klassifizierungsprogramme mit einem Berechnungsprogramm mit den Werkzeugen einer Polynomial Chaos Expansion und einer Item Response Theory unter Zugrundelegung der übermittelten Missionsparameterwerte und zugehöriger Standardabweichungswerte und unter Zugrundelegung des jeweiligen Programmquellcodes einen Eignungswert und einen Fehlerwert,

f) das AUV verwendet das Minenjagd-Klassifizierungsprogramm mit einem höchsten Verwendungswert, der aus dem Eignungswert und dem Fehlerwert abgeleitet ist.

Ein zugehöriges Computerprogrammprodukt, das ein computerlesbares Medium aufweist, umfasst das im Merkmal e) genannte Berechnungsprogramm zur Durchführung des Verfahrens nach einem der Ansprüche, wenn das Berechnungsprogramm im Rechenzentrum 30 ausgeführt wird.

Die Fig. 2 illustriert wichtige Eingaben und Ausgaben des Berechnungsprogramms.

Im Weiteren wird kein Bezug mehr auf die Figuren genommen.

Das AUV ist zur Missionsvorbereitung über ein Datenübertragungskabel oder eine kurzreichweitige hochbandbreite elektromagnetische Schnittstelle mit einem Mutterschiff verbunden. Das AUV ist im Betrieb über eine drahtlose langreichweitige akustische Unterwasserkommunikationsschnittstelle mit geringer Bandbreite mit dem Mutterschiff verbunden. Das Mutterschiff ist über eine (möglicherweise zu verschlüsselnde) Internet/Intranet-Verbindung mit einem Rechenzentrum verbunden. Auf dem Rechenzentrum sind das Berechnungsprogramm nach Merkmal e), eine Unterwasserobjektdatenbasis und ein Internet/Intranet-Server vorhanden.

Der Internet/Intranet-Server beherbergt einen sogenannten "Web-Crawler" oder "Bot", der anhand von Schlüsselwörtern nach Software in OpenSource (Internet) oder speziellen Repositories (Intranet, z.B. auch im Repository eines anderen Mutterschiffes) nach Klassifizierungsverfahren sucht und diese auf Versionsveränderungen hin überprüft. Der Internet/Intranet-Server bewirkt, dass jede an anderer Stelle durchgeführte Veränderung in Klassifizierungsalgorithmen erkannt wird und anhand des beschriebenen Verfahrens auf seine potentiell verbesserte Leistungsfähigkeit für bestimmte Missionen überprüft werden kann. Dadurch ergibt sich der Zusammenhang zur geforderten Schnelligkeit des Gesamt-Verfahrens, für die Lösung der Minenklassifizierungsaufgabe an allen im Netzwerk erreichbaren Speicherorten nach der besten Lösung zu suchen.

Die Unterwasserobjektdatenbasis ist eine nach standardisierten Strukturen aufgebaute Datenbasis, die bewirkt, dass bereits gemessene Daten oder bereits simulierte Szenare nicht neu erstellt werden müssen und mit den jeweiligen Berechnungsmethoden verknüpft bleiben.

Die Zusammenstellung in einem Rechenzentrum bewirkt, dass die logistische Netzwerkstruktur und IT-Sicherheitsmerkmale erreicht werden, z.B. durch einen Cloud-Service, der sich an Internet-of-Things (IoT) und DigitalTwin-Standards anlehnt. Das Verfahren geht davon aus, dass die Minenjagd-Klassifikationsprogramme nach einem Schema der folgenden Art abgelegt sind: Referenzservice_Umgebungsontologie_PerformanceAxiom: Strategie_Konzept_Interface: IRT-performance,IRT-difficulty,Versionsnummer.

In diesem konkreten Ausführungsbeispiel wird gewählt:

- ReferenceService=Automatische Zielerkennung auf einem autonomen Unterwasserfahrzeug
- Umgebungsontologie=Beschreibt, wie Schall sich in Wasser ausbreitet
- PerformanceAxiom=Entsprechend operationeller Vorgaben z.B. in der Vignetten-Formulierung eines Beschaffungsvorganges oder einer Minenjagdübung
- Strategie= auf Physik basierende Mathematische Modellierung
- Konzept= Maximum Likelihood Estimation für Matched Filter
- Interface=Eingang (Anschluss an einen Datenverarbeitungsservice-Synthetic Aperture Sonar) und Ausgang (z.B. geschätzte Performance gegeben Umwelt

Das Mutterschiff bringt das AUVs ins Einsatzgebiet, versorgt es mit Energie und Information. Auf dem MS wird eine Operationelle Forderung/Aufgabenstellung formuliert, entsprechend der operationellen Lage vor Ort. Die Operationelle Aufgabenstellung setzt sich zusammen aus einer als Szenar formulierten Zusammenstellung der operationellen und umweltbezogenen Randbedingungen und einer Zielvorgabe, die in einer auch vorgegebenen Zeit von den AUVs erreicht werden muss (z.B. 75% aller versteckten Minen müssen richtig klassifiziert werden).

Das Verfahren nach Merkmal 1 e) führt für die Gesamtheit der operationell relevanten Aufgabenstellungen und aller Minenjagd-Klassifizierungsprogramme, die im Rechenzentrum vorliegen, eine Eignungsuntersuchung aus, d.h. es wird ein Ranking der Aufgabenschwierigkeiten und der Performance der jeweiligen Algorithmen durchgeführt.

Der Einsatz von AUVs bewirkt, dass kein Personal in ein Minenfeld einfahren muss. Da im abgetauchten Zustand eine Unterwasserkommunikation nur wenig Information zwischen AUV und MS austauschen kann, wird eine Autonomiefunktionalität im AUV benötigt. Die Autonomiefunktionalität beinhaltet einen Minenjagd-Klassifizierungsalgorithmen von gemessenen Daten. Die automatische Klassifizierung bewirkt im AUV, dass eine Entscheidung bzgl. der nächsten Programmschritte vorgenommen wird (z.B. Akustische Transmission als Unterwasserkommunikation, die Information über den Fundort eines Objektes enthält).

Die Autonomie (keine Kabelverbindung zwischen AUV und MS) des AUVs bewirkt, dass der Energievorrat an Bord des AUVs begrenzt ist, was wiederum bewirkt, dass die an Bord des AUVs vorhandene Rechenleistung begrenzt ist. Daher hat das Missionsschiff die Aufgabe, eine möglichst effiziente Software auf das AUV aufzuspielen.

"Das Mutterschiff übermittelt vor einer Klassifizierungsmission mindestens einen Missionsparameterwert und einen zugehörigen Standardabweichungswert mindestens eines Missionsparameters aus jeder der folgenden Gruppen an das Rechenzentrum:

- Gruppe mit Missionsparametern des Meeresbodens, z.B. Information zur Rippelfeldausrichtung
- Gruppe mit Missionsparametern der zu detektierender Unterwasserobjekte, z.B. zu detektierendes Unterwasserobjekt soll mindestens 1 t TNT enthalten"
- Gruppe mit Missionsparametern des Seegebietes, z.B. Größe = 1km x 1km
- Gruppe mit Missionsparametern der operationellen Aufgabenstellung , z.B. Ausführung innerhalb 1 h

Das Rechenzentrum hat Zugriff auf mehrere Minenjagd-Klassifizierungsprogramme.-Um ein detailliertes Beispiel für ein Szenario zu geben, soll die Situation angenommen werden, dass zwei Klassifizierungsalgorithmen in der Datenbank des Rechenzentrums vorhanden sind. Der Klassifizierungsalgorithmus K1 stammt von einer Software, die aufgrund gemessener Daten ein Neuronales Netz hat lernen lassen, dessen Rechenantwort auf nach dem Lernen vorgelegte weitere Eingangsdaten anzeigt, ob in den vorgelegten Daten ein Minenecho repräsentiert ist. Es handelt sich bei der Rechenantwort um eine nichtlineare Funktion der Eingangsdaten, die auf einen Wert in einem vorgegebenen Wertebereich projiziert werden. Der Klassifizierungsalgorithmus K1 wurde mit Daten auf flachem Seeboden - (ohne Rippelfelder) trainiert. Um technisch dieses Beispiel so einfach wie möglich zu gestalten, wird angenommen, dass das Neuronale Netz einen Matched Filter-Algorithmus mit einer Schwelle h1 durchführt. Der Klassifizierungsalgorithmus K2 stammt von einem Programmierer, der die Einfallswinkel des Schalls auf die anstehende Neigung der Rippelfelder berechnet hat und den entstehenden Nachhall von in den gemessenen Daten vorliegendem Nachhall subtrahiert, sodass Nachhall, der durch Rippelfelder entstanden ist, keine Falschalarme bei der Klassifikation entstehen lässt. Um technisch diesen Umstand so einfach wie möglich zu beschreiben, soll die Subtraktion der Nachhallfalschalarme durch das Ansetzen einer höheren Schwelle h2>h1 ebenfalls innerhalb eines Matched Filter-Algorithmus durchgeführt wird. Dass Nachhall nicht Gauß-verteilt ist, wird an dieser Stelle ignoriert, denn es geht an dieser Stelle um die Verfahrensbeschreibung und nicht um die exakte physikalische Umsetzung des Verfahrens.

Des Weiteren sollen für dieses einfache Beispiel die Missionsparameter noch weiter vereinfacht werden:

- Gruppe mit Missionsparametern des Meeresbodens, hier im Beispiel: Rippelfeld ja/nein
- Gruppe mit Missionsparametern der zu detektierender Unterwasserobjekte, hier im Beispiel: Signalstärke im Matched Filter passend zur Rückstreuung einer Mine mit 1 t TNT, die sich in zwei Formen vom Rauschhintergrund erhebt: Einmal mit der Aufgabenschwierigkeit einen höheren Rauschpegeln (schwächeres Signal) und einmal mit einem niedrigeren Rauschpegel (stärkeres Signal). Welche Situation vorliegt, ist bei Missionsbeginn nicht bekannt.
- Gruppe mit Missionsparametern des Seegebietes, hier im Beispiel: Größe = Überdeckung durch das Aussenden eines Aktiv-Sendesignals

Die Gruppe der Missionsparameter der operationellen Aufgabenstellung, d.h. Ausführung durch Senden eines Aktiv-Sendesignals und Empfang des Echos der Mine wird hier mit einer Anzahl von durchzuführenden Messungen gleich 100 angegeben. Dabei müssen 75 Signale erkannt werden bei 10 erlaubten Fehlinterpretationen von ursprünglichen Rauschsignalen als echte Signale.

Im Folgenden wird weiter ausgearbeitet, wie Verwenungswerte für die beiden vorhandenen Klassifizierungsprogramme errechnet werden und wie das jeweils am besten geeignete Klassifizierungsprogramm ausgewählt wird. Zusammenfassung aus den vorangegangenen Beschreibungen des konkreten Anwendungsbeispiels: Das Verfahren zur Klassifizierung von Sonarrohdatenabschnitten, das feststellt, ob die Sonarrohdatenabschnitte Sonarechos von einer Seemine enthalten, ist in diesem Beispiel ein Matched Filter, der mit zwei unterschiedlichen Schwellen (h1 für Algorithmus K1) und (h2 für Algorithmus K2) betrieben wird.

Das Verfahren geht davon aus, dass die Minenjagd-Klassifizierungsprogramme nach einem Schema der folgenden Art abgelegt sind:

Referenzservice_Umgebungsontologie_PerformanceAxiom:

Strategie_Konzept_Interface: IRT-performance,IRT-difficulty,Versionsnummer , wie es schon in der vorangegangenen Beschreibung bis auf "IRT-performance,IRT-difficulty,Versionsnummer" aufgeführt ist.

Die Versionsnummern werden jetzt mit *Versionsnummer: K1 und Versionsnummer: K2* eingetragen.

Zu berechnen sind nun IRT-performance und IRT-difficulty für diese beiden Versionen, entsprechend der allgemeinen Beschreibung "Das Verfahren führt für die Gesamtheit der operationell relevanten Aufgabenstellung (hier: Niedrigeres oder erhöhtes Hintergrundrauschen) und aller Algorithmenausführungen (hier: K1 und K2), die als Minenjagd-Klassifizierungsprogramm im RZ vorliegen, eine Eignungsuntersuchung aus, d.h. es wird ein Ranking der Aufgabenschwierigkeiten und der Performance der jeweiligen Algorithmen durchgeführt."

Diese Eignungsuntersuchung kann experimentell, simulativ oder analytisch näherungsweise durchgeführt werden.

- Eine experimentelle Durchführung bewirkt hohe Kosten durch den Aufwand einer signifikant auswertbaren Datenbasis. Hier: Da nur 2 Programme und 2 Situationen betrachtet werden, ist eine experimentelle Durchführung möglich, aber nur in dafür eigens hergestellter Laboruntersuchung, in denen in realen Operationsbedingungen relevante Parameter ausgeblendet werden.
- Eine simulative Durchführung bewirkt eine Abhängigkeit von den (zur Erhöhung der Simulationsgeschwindigkeit) notwendigen Näherungen. Hier: Da nur 2 Programme und 2 Situationen betrachtet werden, ist eine simulative Durchführung mit hoher numerischer Genauigkeit möglich, aber wenn in realen Operationsbedingungen relevante Parameter hinzugefügt werden, steigt der Rechenaufwand für die Simulationen explosionsartig an.
- Eine analytisch näherungsweise Durchführung bewirkt einen parametrischen Suchraum, in dem für die Missionsvorgaben auf dem Mutterschiff anhand von bereits vorgefertigten Formelwerken die entsprechenden algorithmischen Leistungsfähigkeiten bestimmt werden können. Hier: Die Formeln sind schon für 2 Programme und 2 Situationen umfangreich, wie die weitere Betrachtung im Text unten zeigt, aber die Struktur der Formeln bleibt erhalten, auch wenn alle in realen Operationsbedingungen relevanten Parameter hinzugefügt werden. Dadurch ist ein automatisierter und objektiver Ablauf der Eignungs-, Fehler-, und Verwendungswertberechnung ermöglicht. Verwendungswerte der mehreren Minenjagd-Klassifizierungsprogramme werden berechnet,
- wobei dort ansetzt wird, wo eine auf der Basis von Simulationsdurchläufen durchgeführte Verwendungswertermittlung aufgrund der Komplexität der zugehörigen Simulationsberechnungen nicht mehr möglich ist,
- wobei die operationelle Schallausbreitungs-Szenarien so algorithmisch beschrieben werden, als ob deren Parameter einer numerischen Sensitivitäts- und Unsicherheitsuntersuchung (Monte-Carlo-Auswahl/Latin-Hypercube-Sampling/o.Ä.) mittels einer a-kausale Simulationsdurchführung (wie OpenModelica) und anschließender kausaler Signalentnahme (wie SimuLink) aus dem a-kausalen Simulationssystem unterzogen werden würde,
- wobei dann anstelle der numerischen Untersuchung näherungsweise PCE polynomiale Gleichungen als Surrogate eingesetzt werden und die entstehenden Gleichungen mittels eines Computer-Algebra-Systems gelöst werden,
- wobei die Lösungen die Wahrscheinlichkeitsdichtefunktionen der operationell relevanten Größen des Schallausbreitungs-Szenarios beschreiben, die für das IRT-Ranking der zur Auswahl stehenden Klassifizierungsprogramme und der Fehleranalyse dieses IRT-Rankings verwendet werden.

Das Rechenzentrum berechnet also mit allen (auch in komplexen Szenarien) Werten der erhaltenen Missionsparameter in einem nach operationellen Gesichtspunkten gestalteten objektivem Maß Verwendungswerte aller Minenjagd-Klassifikationsprogramme. Es werden weder extensive und detaillierte Simulationsläufe durchgeführt, wenn die analytische Berechnung nach Merkmal e) ausgeführt wird.

Diese analytisch näherungsweise Durchführung wird weiter detailliert und als **zweite Ausbildung** bezeichnet:

i. Der Schritt e) umfasst eine Berechnung von Schallausbreitungsunsicherheiten, so, wie sie der Stand der Technik vorsieht mittels geeigneter Ausbreitungs- und Echo-Rückstreumodelle, hier: Ausbreitung ohne Unsicherheiten, Rückstreuung der Umgebung nach vorab diskutiertem Rauschmodell im Matched Filter

ii. die Schallausbreitungsunsicherheiten enthalten die Informationen der Missionsparameterwerte, wie im Abschnitt Missionsparameterwerte beschrieben,

iii. die Schallausbreitungsunsicherheiten werden durch eine analytische Lösung des Gleichungssystems, das durch eine Polynomial Chaos Expansion des die Schallausbreitung modellierenden Differentialgleichungssystems entsteht, bestimmt und liegen in der Form von polynomialen Gleichungen vor, die "Wahrscheinlichkeitsdichtefunktionen bezüglich zu klassifizierender Eigenschaften von Unterwasserobjekten" analytisch beschreiben, wobei für den Lösungsansatz der analytischen Lösung eine Taylorreihe mit einem polynomialen Faktor gewählt werden kann, was eine Standardvorgehensweise zur Lösungssuche von Differentialgleichungen darstellt, die speziell für Schwingungs- und Wellengleichungen mit einer Taylorreihe der Sinus- bzw. Cosinus-Funktionen endet. Anschließend werden aus der Polynomial Chaos Expansion Formulierung die Kumulanten errechnet, die via Edgeworth Expansion in eine Näherung der Wahrscheinlichkeitsdichtefunktion überführt wird. Hier, in diesem konkreten Ausführungsbeispiel wird entsprechend der Vorgabe für den Missionsparameter der zu detektierenden Unterwasserobjekte die Signalstärke als pro Signalaussendung gleichverteilt zwischen höherem und niedrigerem Rauschhintergrund angenommen und eine entsprechende Polynomial Chaos Expansion eingesetzt.

iv. Erhalt der Formeln für die Eignungswerte der mehreren Minenjagd-Klassifizierungsprogramme durch Anwendung der Item Response Theory Berechnung, in die die "Wahrscheinlichkeitsdichtefunktionen bezüglich zu klassifizierender Eigenschaften von Unterwasserobjekten" eingehen. Analytisch wird mit der Edgeworth Expansion die Wahrscheinlichkeit errechnet, dass der Algorithmus K1 in 75 von 100 Fällen das Signal aus dem Rauschen erkannt hat und dabei weniger als 10 Falschalarme vorgekommen sind (jeweils für den Fall eines höheren oder niedrigeren Rauschhintergrundes), dann die Wahrscheinlichkeit, dass der Algorithmus K2 in 75 von 100 Fällen das Signal aus dem Rauschen erkannt hat und dabei weniger als 10 Falschalarme vorgekommen sind (jeweils für den Fall eines höheren oder niedrigeren Rauschhintergrundes). In der folgenden Formel wird der Experimentausgang mit x (Index p für Programmnummer 1 für K1 und 2 für K2, Index i ist 1 für Schwierigkeit mit wenig Rauschhintergrund und 2 für Schwierigkeit mit mehr Rauschhintergrund) bezeichnet. Dann können aus der Lösung der Formel:

$$0 = \sum_{i=1}^{N_I} \left( x_{p,i} \cot(\frac{\pi}{4} + \theta_p - \sigma_i) - (1 - x_{p,i}) \, tan(\frac{\pi}{4} + \theta_p - \sigma_i) \right), p = 1, \ldots, N_P$$

$$0 = \sum_{p=1}^{N_P} \left( x_{p,i} \cot(\frac{\pi}{4} + \theta_p - \sigma_i) - (1 - x_{p,i}) \, tan(\frac{\pi}{4} + \theta_p - \sigma_i) \right), i = 1, \ldots, N_I$$

die Eignungswerte θ (Index p wieder für Programmnummer 1 oder 2) und σ (Index i wieder für Schwierigkeit mit wenig oder mehr Rauschhintergrund) für die Anzahl der Schwierigkeiten N (Index I=2) und Anzahl der Programme N (Index P=2) ermittelt werden. Dazu werden die cot- und tan-Funktionen in Reihen entwickelt:

$$\tan x = x + \frac{1}{3} x^3 + \frac{2}{15} x^5 + \frac{17}{315} x^7 + \ldots$$

$$\cot x = \frac{1}{x} - \frac{1}{3}x - \frac{1}{45} x^3 - \frac{2}{945} x^5 - \frac{1}{4725} x^7 - \ldots$$

Das so insgesamt entstehende Gleichungssystem wird nach θ (für Index 1 und Index 2) als Funktion von x (für Index p=1 und p=2 und Index i=1 und i=2) aufgelöst.

v. Erhalt der Formeln der zugehörigen Fehlerwerte durch systematische Fehlerableitung: Die Unsicherheit geschätzter Eignungswertparameter wird berechnet durch eine Gaußsche Approximation der Posteriori-Verteilung dieser Parameter.

$\theta_1$ und $\theta_2$ liegen nach Abfolge der Rechenschritte in iv. als Funktion von $x_{p,i}$ vor, wodurch die Fehlerfortpflanzungsformel durch die Berechnung der entsprechenden Funktionaldeterminante und der Kenntnis der bereits berechneten Edgeworth Expansion für die Experimentausgänge $x_{p,i}$ bestimmt werden kann.

vi. Numerische Lösung der Formeln für die Eignungswerte und zugehörigen Fehlerwerte, wobei zu beachten ist, dass die analytischen Lösungen in iv. und v. Fallunterscheidungen enthalten können, in der Form von mehreren Nullstellen der entstandenen Polynome. Die numerische Lösung muss sicherstellen, dass die maximal wahrscheinlisten Werte von $\theta_1$, $\theta_2$, $\sigma_1$ und $\sigma_2$ gefunden werden und dass die numerische Lösung stabil ist, wenn sich der Grad der Reihenentwicklungen oder das Modell der Polynomial Chaos Expansions ändern.

Die zweite Ausbildung ermöglicht die automatisierte Entscheidungsfindung, welche Software eingesetzt werden soll. Die Automatisierung der Entscheidungsfindung über das im folgenden spezifizierte Verfahren bewirkt, dass vorhandene Erfahrungswerte für Minenjagd-Klassifizierungsalgorithmen direkt auf dem Mutterschiff übernommen werden können, somit also schnell auf evtl. an anderen Orten schon erprobte Veränderungen/Verbesserungen reagiert werden kann. Das bewirkt, dass eine auf gegnerischer Seite eingebrachte Veränderung in ihrer Wirkung minimiert werden kann, so wie in dem Abschnitt Allgemeine Betrachtung ausgeführt. Über eine "bloße Automatisierung" der geistigen Tätigkeit hinaus berechnet das Rechenzentrum mit den Werten der erhaltenen Missionsparameter in einem nach operationellen Gesichtspunkten gestalteten objektivem Maß Verwendungswerte aller Programmquelltexte. Dies löst die Aufgabe in überraschender Weise, denn es werden weder extensive und detaillierte Simulationsläufe durchgeführt, noch ist man auf die nicht im Detail nachvollziehbaren bzw. immer auch subjektiven Entscheidungen eines Experten als menschlichen Bediener angewiesen. Ein Verfahren zur schnellen Entscheidungsfindung, ob unterschiedliche als Programmcode vorliegende Minenjagd-Klassifizierungsalgorithmen dieselben Kategorien operationell neutralisieren oder nicht, stellt fest, ob der Einsatz eines anderen Programmes als das derzeit auf dem Minenjagdsensor eingesetzte Programm fundamental andere Ergebnisse erwarten lassen würde. Dazu wird zum Beispiel ein signifikantes Abstandsmaß entsprechend eines Chi$^2$-Kriteriums errechnet als Verwendungswert aus Eignungswerten und Fehlerwerten des Merkmals e) errechnet, dessen Schwellenüberschreitung zu einer negativen Entscheidung bzgl. des Einsatzes des Einsatzes des anderen Minenjagd-Klassifikationsprogrammes führt.

Gemäß einer **dritten Ausbildung** wird im Schritt vi. der zweiten Ausbildung ein FPGA-Chip eingesetzt, um die Formeln aus den Schritten iv. und v. parallelisiert zu berechnen. Wie die vorangegangene Berechnung zeigt, bilden die Anwendungen der Polynomial Chaos Expansion und der Item Respons Theory eine gleichbleibende Struktur der in Anspruch 2 vi. numerischen Lösungsformeln. Des Weiteren enthalten die Berechnungen für reale Systeme Ansatzmöglichkeiten für eine Parallelisierung der numerischen Berechnung (z.B. wenn es um Richtungsberechnung für gradweise Drehungen um 360° geht). Außerdem lassen sich die Formeln auch durch eine Modularisierung (z.B. bei Betrachtung unterschiedlicher Schallrückstreuungsmodelle (Scattering-Interfaces) wiederverwertbar gestalten. Diese für Minenjagd-Aufgaben immer gleichen Algorithmusstrukturen (Schallausbreitung, Schallscattering, Signalverarbeitung) eignen sich die Entwicklung eines FPGA-Chips, der zur numerischen Lösung der mathematischen Gleichungen eingesetzt wird. So können Ergebnisse schneller errechnet und schneller an das Mutterschiff übermittelt werden.

Eine **vierte Ausbildung** betrifft eine Unterwasserobjektdatenbasis. Das Berechnungsprogramm hat Zugriff auf die Unterwasserobjektdatenbasis. Die Unterwasserobjektdatenbasis ist eine nach einer festgelegten Struktur aus "Referenz.Ontologie.Effekt : Strategie. Konzept, Schnittstelle : IRT-performance,IRT-difficulty,Versionsnummer" aufgebaute Datenbasis, in der die Zugriffe auf Elemente der zu untersuchenden mehreren Minenjagd-Klassifizierungsprogramme und der Modellierung der Schallausbreitung (incl. Sensorik) und des Sensorplattformverhaltens durch entsprechende Micro-Services gewährleistet ist. Die Unterwasserobjektdatenbasis kann im Rechenzentrum oder disloziert in einer Netzwerkumgebung betrieben werden. Die Unterwasserobjektdatenbasis ermöglicht das Abspeichern nicht nur von bereits berechneten Minenjagd-Klassifikationsprogrammen, sondern auch der Zwischenergebnisse, wie zum Beispiel der Formeln des Scatterings für einen bestimmten Typ von Minen oder Formeln der Ausbreitungsbedingungen in einem bestimmten Seegebiet.

Eine **fünfte Ausbildung** betrifft eine Abnahme und ein Testen des Berechnungsprogramms. Anstelle einer Unterwasserobjektdatenbasis wird eine Objektdatenbasis aufgebaut, die nach denselben festgelegten Strukturen aus "Referenz.Ontologie.Effekt : Strategie. Konzept. Schnittstelle : IRT-performance,IRT-difficulty,Versionsnummer" aufgebaut ist und zusätzlich zur Unterwasser-Sensorik andere Sensor-Formen (Bilddaten, RADAR-Daten, etc.) mit entsprechenden Verarbeitungs- und Klassifizierungsprogrammen, Mediumausbreitungsdifferentialgleichungen, Umgebungs- und Messplattformbeschreibungen enthält, d.h. die Unterwasserobjektdatenbasis erhält eine erweiterte Palette an Micro-Services. Jedes Computerprogramm bedarf nämlich nicht nur einer Verifikation und Validierung, sowie Zertifizierung, es bedarf auch eines Abnahmetests, d.h. einer Gegenüberstellung von Forderungen an das Computerprogramm und den in echten realen Bedingungen erzielten Resultaten. Es wird bei dieser Gegenüberstellung festgestellt, wie oft das Computerprogramm tatsächlich die richtige Entscheidung getroffen hat und wie viele Fehlentscheidungen das Computerprogramm getroffen hat.

Diese echten realen Bedingungen lassen sich allerdings für die Minenjagd nicht schaffen: Es gibt nicht ausreichend verfügbaren Daten für eine Durchführung von Experimenten, bei denen die Leistungsfähigkeit des Verfahrens anhand realer Daten überprüft werden kann, denn der Parameterraum für Minendesign, Umgebungsbedingungen und Operationelle Forderungen ist einfach zu groß, um derartig kostspielige Experimente durchführen zu können. Um dennoch eine Abnahme einer Realisierung des Verfahrens formulieren zu können, soll die Testung des Verfahrens auf die der Eignungs-, Fehler- und Verwendungswerteberechriungen begrenzt werden. Wenn diese Berechnungen auch für andere Anwendungsfelder als der Minenjagd ausreichend oft stimmen, dann gilt die Realisierung als abgenommen. Es wird also nur der Kern des realisierten Auswahlentscheidungsservices (um in der Sprache des iiconsortiums zu bleiben) einem Test unterzogen. Die Richtigkeit der in den Kern eingebrachten Modellierungen muss dann davon unabhängig nach wissenschaftlicher Methodik durchgeführt werden. Um diese Form eines Abnahmetests vorzubereiten, muss der Ontologie-Konzept-Struktur der Objektdatenbank weitere mathematisch einheitlich formulierte Informationen zugeführt werden. Die Unterwasserdatenbasis der vierten Ausbildung wird dementsprechend mittels Ausbaus der Ontologien und Konzepte erweitert. Das geschieht analog zum Einbringen anderer Schallausbreitungsmodelle oder Scatteringmodelle, die, wie im Rahmen des "Stand der Technik"-Abschnittes diskutiert, unterschiedliche Schwerpunkte im Hinblick auf die modellierten physikalischen Zusammenhänge setzen. Im "Konkreten Ausführungsbeispiel" wurde die Unkenntnis über die Signalstärke durch die Polynomial Chaos Expansion (PCE) ausgedrückt, aber in einer realen Schallausbreitungssituation kommen weitere Parameter (wie durch mögliche Lösungen der entsprechenden Wellengleichungen aus den zughörigen Modelle bestimmt) hinzu, deren Werte in gewissen Grenzen unbekannt sind. Genauso lassen sich auch Modelle für die Anwendung mehrerer AUVs, mehrerer Sensoren pro AUV, mehrere Sensoren, mehrere Seegebiete, komplexere Meeresböden und mehrere Minentypen einbringen.

Es wird eine überraschenderweise einfache Erweiterung auch auf andere Ausbreitungsmedien und Sensorik bzw. andere Plattformen und operationelle Szenarien vorgenommen. Zum Beispiel ist es der Auswahlentscheidungsservices auch in der Lage, die Berechnungen für Wellengleichungen aus der Elektromagnetik oder der Optik durchzuführen. Tatsächlich stellen a-kausale Simulationsdurchführung (wie OpenModelica) und kausaler Signalentnahmen (wie SimuLink) aus dem a-kausalen Simulationssystem bereits Formatvorschriften zur Verfügung, mit dem dieses Einbringen technisch einfach zu realisieren ist.

Zum Beispiel in der Optik (wie in einer Anwendung des roboflow-ai-Beispiels) existieren sehr viele Anwendungsfälle für Klassifizierungsalgorithmen zusammen mit RADAR-Sensorik oder Ultra-Schall-Sensorik liefert das Internet verfügbare Datensätze und Klassifizierungsprogramme, mit denen sich der realisierte Auswahlentscheidungsservice testen lässt.

**Patentansprüche**

1.  Verfahren zur Klassifizierung von Unterwasserobjekten (40), mit folgenden Merkmalen:

    a) das Verfahren verwendet ein unbemanntes Unterwasserfahrzeug, welches nachfolgend AUV (10) genannt wird und eine an einen AUV-Rechner (11) angeschlossene Sonareinrichtung (12) aufweist, und einen Mutterschiffsrechner (21) eines Mutterschiffs (20), der einerseits mit dem AUV-Rechner (11) und andererseits mit einem Rechenzentrum (30) kommuniziert,
    b) während einer Klassifizierungsmission klassifiziert der AUV-Rechner (11) mit einem Minenjagd-Klassifizierungsprogramm aus Sonarrohdatenabschnitten der Sonareinrichtung (12) Unterwasserobjekte (40),
    c) das Mutterschiff (20) übermittelt vor einer Klassifizierungsmission mindestens einen Missionsparameterwert und einen zugehörigen Standardabweichungswert mindestens eines Missionsparameters aus jeder der folgenden Gruppen an das Rechenzentrum:

        • Gruppe mit Missionsparametern des Meeresbodens,
        • Gruppe mit Missionsparametern der zu detektierender Unterwasserobjekte,
        • Gruppe mit Missionsparametern des Seegebietes,
        • Gruppe mit Missionsparametern der operationellen Aufgabenstellung,

    d) das Rechenzentrum hat Zugriff auf einen jeweiligen Programmquellcode mehrerer Minenjagd-Klassifizierungsprogramme,
    e) das Rechenzentrum berechnet für jedes der mehreren Minenjagd-Klassifizierungsprogramme mit einem Berechnungsprogramm mit den Werkzeugen einer Polynomial Chaos Expansion und einer Item Response Theory unter Zugrundelegung der übermittelten Missionsparameterwerte und zugehöriger Standardabweichungswerte und unter Zugrundelegung des jeweiligen Programmquellcodes einen Eignungswert und einen Fehlerwert,
    f) das AUV (10) verwendet das Minenjagd-Klassifizierungsprogramm mit einem höchsten Verwendungswert, der aus dem Eignungswert und dem Fehlerwert abgeleitet ist.

2.  Verfahren nach Anspruch 1, bei dem der Schritt e) folgende Merkmale umfasst:

    i. der Schritt e) umfasst eine Berechnung von Schallausbreitungsunsicherheiten,
    ii. die Schallausbreitungsunsicherheiten enthalten die Informationen der Missionsparameterwerte,
    iii. die Schallausbreitungsunsicherheiten werden durch eine analytische Lösung des Gleichungssystems, das durch eine Polynomial Chaos Expansion des die Schallausbreitung modellierenden Differentialgleichungssystems entsteht, bestimmt und liegen in der Form von polynomialen Gleichungen vor, die Wahrscheinlichkeitsdichtefunktionen bezüglich zu klassifizierender Eigenschaften von Unterwasserobjekten analytisch beschreiben,
    iv. Erhalt der Formeln für die Eignungswerte der mehreren Minenjagd-Klassifizierungsprogramme durch Anwendung einer Item Response Theory Berechnung, in die die Wahrscheinlichkeitsdichtefunktionen bezüglich zu klassifizierender Eigenschaften von Unterwasserobjekten eingehen,
    v. Erhalt der Formeln der zugehörigen Fehlerwerte durch systematische Fehlerableitung: Die Unsicherheit geschätzter Eignungswertparameter wird berechnet durch eine Gaußsche Approximation der Posteriori-Verteilung dieser Parameter,
    vi. numerische Lösung der Formeln für die Eignungswerte und zugehörigen Fehlerwerte.

3.  Verfahren nach Anspruch 2, bei dem im Schritt vi. des Anspruches 2 ein FPGA-Chip eingesetzt wird, um die Formeln aus den Schritten iv. und v. parallelisiert zu berechnen.

4. Verfahren nach einem der Ansprüche 1 bis 3, bei dem das Berechnungsprogramm Zugriff hat auf eine Unterwasserobjektdatenbasis, die eine nach einer festgelegten Struktur aus "Referenz.Ontologie.Effekt : Strategie. Konzept. Schnittstelle : IRT-performance,IRT-difficulty, Versionsnummer" aufgebaute Datenbasis ist.

5. Verfahren nach Anspruch 4, bei dem zur Abnahme und zum Testen des Berechnungsprogramms eine Objektdatenbasis verwendet wird, die die gleiche festgelegte Struktur wie die Unterwasserobjektdatenbasis aufweist und zusätzlich zu Unterwasser-Sensorik-Daten mindestens auch Überwasser-Sensorik-Daten aufweist.

6. Computerprogrammprodukt, das ein computerlesbares Medium aufweist, umfassend das im Anspruch 1 im Merkmal e) genannte Berechnungsprogramm zur Durchführung des Schrittes e) des Verfahrens nach einem der Ansprüche 1 bis 5, wenn das Berechnungsprogramm im Rechenzentrum ausgeführt wird.

**Claims**

1. Method for classifying underwater objects (40), having the following characteristics:

   a) the method uses an unmanned underwater vehicle, which is referred to below as AUV (10) and has a sonar device (12) connected to an AUV computer (11), and a mother ship computer (21) of a mother ship (20), which communicates on the one hand with the AUV computer (11) and on the other hand with a data center (30),
   b) during a classification mission, the AUV computer (11) uses a mine hunting classification programme to classify underwater objects (40) from raw sonar data sections of the sonar device (12),
   c) the mother ship (20) transmits to the data centre, prior to a classification mission, at least one mission parameter value and an associated standard deviation value of at least one mission parameter from each of the following groups:

   • Group with seabed mission parameters,
   • Group with mission parameters of the underwater objects to be detected,
   • Group with mission parameters of the sea area,
   • Group with mission parameters-of the operational task,

   d) the data center has access to the respective programme source code of several mine hunting classification programmes,
   e) the data centre calculates a suitability value and an error value for each of the several mine hunting classification programmes using a calculation programme with the mathematical tools of Polynomial Chaos Expansion and Item Response Theory, on the basis of the transmitted mission parameter values and -associated standard deviation values and on the basis of the respective programme source code,
   f) the AUV (10) uses the mine hunting classification programme with a maximum use value derived from the suitability value and the error value.

2. Method according to claim 1, wherein step-e) comprises the following features:

   i. step e) includes a calculation of sound propagation uncertainties,
   ii. the sound propagation uncertainties contain the information of the mission parameter values,
   iii. the sound propagation uncertainties are determined by an analytical solution of the system of equations resulting from a polynomial chaos expansion of the system of differential equations modelling sound propagation and are in the form of polynomial equations that analytically describe probability density functions with respect to properties of underwater objects to be classified,
   iv. Obtaining the formulas for the suitability values of the several mine hunting classification programmes by applying the Item Response Theory calculation, which includes the probability density functions with respect to properties of underwater objects to be classified,
   v. Obtaining the formulas of the corresponding error values by systematic error derivation: The uncertainty of estimated suitability value parameters is calculated by a Gaussian approximation of the posterior distribution of these parameters,
   vi. numerical solution of the formulas for the suitability values and associated error values.

3. Method according to claim 2, wherein in step vi. of claim 2 an FPGA chip is used to calculate the formulas from steps iv. and v. in a parallelized manner.

4. Method according to one of claims 1 to 3, in which the calculation programme has access to an underwater object database which is a database constructed according to a defined structure of "reference.ontotogy.effect:strategy.concept.interface:IRT-performance, IRT-difficulty, version number".

5. Method according to claim 4, wherein an object database is used for acceptance and testing of the calculation programme, whereby the object database has the same defined structure as the underwater object database and, in addition to underwater sensor data, also has at least above-water sensor data.

6. Computer programme product comprising a computer-readable medium comprising the calculation programme mentioned in step e) of claim 1 for carrying out step e) of the method according to one of claims 1 to 5 when the calculation programme is executed in the data center.

**Revendications**

1. Procédé de classification d'objets sous-marins (40), présentant les caractéristiques suivantes :

a) le procédé utilise un véhicule autonome sous-marin, appelé ci-après AUV (10), qui comporte un dispositif sonar (12) connecté à un calculateur AUV (11), et un calculateur de vaisseau-mère (21) d'un vaisseau-mère (20) qui communique d'une part avec le calculateur AUV (11) et d'autre part avec un centre de calcul (30),
b) pendant une mission de classification, l'ordinateur AUV (11) classifie des objets sous-marins (40) à l'aide d'un programme de classification de chasse aux mines à partir de sections de données sonar brutes du dispositif sonar (12),
c) avant une mission de classification, le vaisseau-mère (20) transmet au centre de calcul au moins une valeur de paramètre de mission et une valeur d'écart type associée d'au moins un paramètre de mission de chacun des groupes suivants :

- groupe avec les paramètres de mission du fond marin,
- groupe avec les paramètres de mission des objets sous-marins à détecter,
- groupe avec les paramètres de mission de la zone maritime,
- groupe avec les paramètres de mission de la tâche opérationnelle,

d) le centre de calcul a accès à un code source de programme respectif de plusieurs programmes de classification de la chasse aux mines,
e) le centre de calcul calcule une valeur d'aptitude et une valeur d'erreur pour chacun des programmes de classification de la chasse aux mines à l'aide d'un programme de calcul utilisant les outils de la Polynomial Chaos Expansion et de la Item Response Theory, sur la base des valeurs des paramètres de mission transmises et des valeurs d'écart type correspondantes, et sur la base du code source du programme correspondant,
f) l'AUV (10) utilise le programme de classification de la chasse aux mines avec une valeur d'utilisation maximale dérivée de la valeur d'aptitude et de la valeur d'erreur.

2. Procédé selon la revendication 1, dans lequel l'étape e) comprend les caractéristiques suivantes :

i. l'étape e) comprend un calcul des incertitudes de propagation du son,
ii. les incertitudes de propagation du son contiennent les informations des valeurs des paramètres de mission,
iii. les incertitudes de propagation du son sont déterminées par une solution-analytique du système d'équations résultant de la Polynomial Chaos Expansion du système d'équations différentielles modélisant la propagation du son et se présentent sous la forme d'équations polynomiales décrivant analytiquement des fonctions de densité de probabilité relatives à des propriétés d'objets sous-marins à classer,
iv. Obtention des formules des valeurs d'aptitude de plusieurs programmes de classification de la chasse aux mines par l'application d'un calcul de la Item Response Theory, qui intègre les fonctions de densité de probabilité relatives aux propriétés des objets sous-marins à classer,
v. Obtention des formules des valeurs d'erreur associées par dérivation systématique des erreurs : l'incertitude des paramètres estimés des valeurs d'aptitude est calculée par une approximation gaussienne de la distribution a posteriori de ces paramètres,

vi. Résolution numérique des formules des valeurs d'aptitude et des valeurs d'erreur associées.

3. Procédé selon la revendication 2, dans lequel une puce FPGA est utilisée à l'étape vi. de la revendication 2 pour calculer en parallèle les formules des étapes iv. et v..

4. Procédé selon l'une quelconque des revendications 1 à 3, dans lequel le programme de calcul a accès à une base de données d'objets sous-marins comprenant une liste de données établie selon une structure prédéterminée parmi "Référence.Ontotogie.Effet : Stratégie.Concept.Interface : IRT-performance,IRT-difficulty,numéro de version".

5. Procédé selon la revendication-4, dans lequel, pour réceptionner et tester le programme de calcul, on utilise une base de données d'objets ayant la même structure déterminée que la base de données d'objets sous-marins et comprenant, en plus des données de capteurs sous-marins, au moins des données de capteurs de surface.

6. Produit programme informatique associé comprenant un support lisible par ordinateur, comprenant le programme de calcul mentionné dans l'étape e) de la revendication 1 pour la mise en œuvre du procédé de l'étape e) selon l'une quelconque des revendications 1 à 5, lorsque le programme de calcul est exécuté dans le centre de calcul.

## Fig. 1

## Fig. 2

| Eingabe: Missionsparameter-werte und zugehörige Standardabweichungswerte des Meeresbodens, der Unterwasserobjekte, des Seegebiets und der Aufgabenstellung | Eingabe: Programm-quellcodes mehrerer Minenjagd-Klassifikationsprogramme |

**Berechnungsprogramm**

**Ausgabe:** Eignungswert und zugehöriger Fehlerwert für jedes Minenjagd-Klassifikationsprogramm

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2017227452 A
- CN 101604019 B
- DE 102012006566 A1
- GB 2206209 A
- KR 102157857 B1

**In der Beschreibung aufgeführte Nicht-Patentliteratur**

- **KEVIN D. LEPAGE**. Polynomial Chaos Expansions. *9th International Conference on Information Fusion*, 10 July 2006
- **HANNS LUDWIG HARNEY**. Bayesian Inference, Data Evaluation and Decisions. Springer, 2016, 138-149
- **T. LEFEBVRE**. On Moment Estimation From Polynomial Chaos Expansion Models. *IEEE Control Systems Letters*, November 2021, vol. 5 (5), 1519-1524
- *Edgeworth series - Wikipedia*, 03 March 2023, https://en.wikipedia.org/wiki/Edgeworth_series
- *Fehlerfortpflanzung - Wikipedia*, 03 March 2023, https:/Ide.wikipedia.org/wiki/Fehlerfortpflanzung